# EUROPEAN PATENT APPLICATION

(11) **EP 4 357 073 A1**
(43) Date of publication of application: **24.04.2024**
(21) Application number: 21947151.3
(22) Date of filing: 24.06.2021
(51) Int. Cl.: B23Q 7/10, B23Q 3/157

(54) **STORAGE SYSTEM**

(71) Applicant: DMG Mori Co., Ltd., Yamatokoriyama-shi, Nara 639-1160 (JP)
(72) Inventor: SUMIOKA, Kenji, Yamatokoriyama-shi, Nara 639-1160 (JP); MINESHIGE, Tomoyuki, Yamatokoriyama-shi, Nara 639-1160 (JP); KANAIWA, Katsuki, Yamatokoriyama-shi, Nara 639-1160 (JP)
(74) Representative: Isarpatent
(86) International application number: PCT/JP2021/023971
(87) International publication number: WO 2022/269866

(57) **Abstract**

A tool storage system (10) includes a tool storage portion (21) that includes a wheel portion (31) turnable about a predetermined axis (110) and detachably stores tools at positions along an outer circumferential edge (31p) of the wheel portion (31). The wheel portion (31) has, in a partial section in an outer circumferential direction of the wheel portion (31), an opening (36) that is cut out from the outer circumferential edge (31p) of the wheel portion (31) toward the predetermined axis (110) and passes through the wheel portion (31) in an axial direction of the predetermined axis (110). The tool storage system (10) further includes a transport device that includes a moving body movable in the axial direction of the predetermined axis (110) through the opening (36) while holding each of the tools and transports each of the tools to the tool storage portion (21).

## Description

### TECHNICAL FIELD

The present invention relates to a storage system.

### BACKGROUND ART

For example, Japanese Patent Laying-Open No. 2015-472 (PTL 1) discloses a circular, annular tool magazine shelf of a tower construction, comprising a plurality of immovable tool deposit plates arranged in vertical succession and in a circular ring for receiving a machining tool, a spindle tower arranged inside of the plurality of immovable tool deposit plates, a vertical slide linearly displaceable along a vertical axis of the spindle tower, a horizontal slide mounted on the vertical slide and linearly displaceable along a horizontal axis, and a tool gripper arranged on the horizontal slide and configured to receive and release the machining tool.

### CITATION LIST

### PATENT LITERATURE

PTL 1: Japanese Patent Laying-Open No. 2015-472

### SUMMARY OF INVENTION

### TECHNICAL PROBLEM

As disclosed in PTL 1 described above, a tool storage system is known that includes a tool storage portion for storing various tools used for machining a workpiece, and a transport device for transporting tools to the tool storage portion. While such a tool storage system tends to have a large size for storing many tools, it is required to have a compact configuration to reduce the space for installing the tool storage system.

Therefore, an object of the present invention is to solve the above-mentioned problem and provide a storage system that has a compact configuration.

### SOLUTION TO PROBLEM

A storage system according to the present invention incudes a storage portion that includes a wheel portion turnable about a predetermined axis and detachably stores a plurality of transport targets at positions along an outer circumferential edge of the wheel portion. Each of the plurality of transport targets is a tool or a workpiece. The wheel portion has, in a partial section in an outer circumferential direction of the wheel portion, an opening that is cut out from the outer circumferential edge of the wheel portion toward a predetermined axis and passes through the wheel portion in an axial direction of the predetermined axis. The storage system further includes a transport device that includes a moving body movable in the axial direction of the predetermined axis through the opening while holding each of the plurality of transport targets and transports each of the plurality of transport targets to the storage portion.

In the storage system configured as described above, when the transport target is transported to the storage portion by the transport device, the moving body moves in the axial direction of the predetermined axis through the opening. In this case, since the opening is cut out from the outer circumferential edge of the wheel portion toward the predetermined axis, the moving body can be prevented from projecting from the outer circumferential edge of the wheel portion. This allows the storage system to have a compact configuration.

Preferably, the storage system includes a plurality of the storage portions arranged in the axial direction of the predetermined axis.

The storage system configured as described above, which includes the plurality of storage portions, can have a compact configuration.

Preferably, the storage portion further includes a plurality of holding portions detachably attached to the wheel portion for respectively holding the plurality of transport targets. The moving body moves in the axial direction of the predetermined axis through the opening while holding each of the plurality of holding portions. The plurality of holding portions are provided to be located side by side along the outer circumferential edge of the wheel portion and to be absent at the partial section.

In the storage system configured as described above, the moving body can be moved in the axial direction of the predetermined axis without interfering with the plurality of holding portions.

Preferably, the transport device further includes a guide device that guides the moving body in the axial direction of the predetermined axis and is arranged radially inwardly of the predetermined axis relative to the outer circumferential edge of the wheel portion.

In the storage system configured as described above, the guide device does not project from the outer circumferential edge of the wheel portion, resulting in a more compact configuration of the storage system.

Preferably, the storage system includes a plurality of the storage portions arranged in the axial direction of the predetermined axis. The guide device includes a rail extending in the axial direction of the predetermined axis. The rail has, for each of the plurality of storage portions, a first cutout that passes through the rail in the outer circumferential direction of the wheel portion and allows the wheel portion to pass therethrough.

In the storage system configured as described above, the wheel portion is turnable about the predetermined axis without interfering with the rail.

Preferably, the storage portion further includes a support portion that supports the wheel portion such that the wheel portion is turnable about the predetermined axis. The rail is supported by the support portion.

In the storage system configured as described above, the support portion that turnably supports the wheel portion is shared as the member for supporting the rail, resulting in a simple configuration of the storage system.

Preferably, the transport device further includes a feed device that feeds the moving body in the axial direction of the predetermined axis and is arranged radially inwardly of the predetermined axis relative to the outer circumferential edge of the wheel portion.

In the storage system configured as described above, the feed device does not project from the outer circumferential edge of the wheel portion, resulting in a more compact configuration of the storage system.

Preferably, the storage system includes a plurality of the storage portions arranged in the axial direction of the predetermined axis. The feed device includes a rack extending in the axial direction of the predetermined axis. The rack has, for each of the plurality of storage portions, a second cutout that passes through the rack in the outer circumferential direction of the wheel portion and allows the wheel portion to pass therethrough.

In the storage system configured as described above, the wheel portion is turnable about the predetermined axis without interfering with the rack.

Preferably, the storage portion further includes a support portion that supports the wheel portion such that the wheel portion is turnable about the predetermined axis. The rack is supported by the support portion.

In the storage system configured as described above, the support portion that rotatably supports the wheel portion is shared as the member for supporting the rack, resulting in a simple configuration of the storage system.

Preferably, the feed device further includes a first pinion, a second pinion, and a third pinion provided in the moving body. The first pinion and the second pinion are spaced from each other in the axial direction of the predetermined axis and are engaged with the rack. The third pinion is engaged with the first pinion and the second pinion and is not engaged with the rack.

In the storage system configured as described above, the first pinion and the second pinion are spaced from each other in the axial direction of the predetermined axis, thus allowing at least any one of the first pinion and the second pinion to be engaged with the rack even though the rack has the second cutout. Also, the third pinion that is not engaged with the rack is engaged with the first pinion and the second pinion, and accordingly, can transfer rotation to the first pinion and the second pinion. Thus, the moving body can be smoothly fed in the axial direction of the predetermined axis by the feed device.

### ADVANTAGEOUS EFFECTS OF INVENTION

According to the present invention, a storage system that has a compact configuration can be provided, as described above.

### BRIEF DESCRIPTION OF DRAWINGS

Fig. 1 is a perspective view of a tool storage system according to an embodiment of the present invention.
Fig. 2 is another perspective view of the tool storage system according to the embodiment of the present invention.
Fig. 3 is a sectional view of a tool magazine, which is viewed in the direction indicated by the arrows on the line III-III in Fig. 2.
Fig. 4 is a front view of the tool magazine viewed in the direction indicated by the arrow IV in Fig. 2.
Fig. 5 is a perspective view of a tool storage portion in Fig. 1.
Fig. 6 is another perspective view of the tool storage portion in Fig. 1.
Fig. 7 is a perspective view of a wheel portion in Fig. 1 and a plurality of tool holding portions attached to the wheel portion.
Fig. 8 is another perspective view of the wheel portion in Fig. 1 and the plurality of tool holding portions attached to the wheel portion.
Fig. 9 is a perspective view of a drivingly turning portion of the wheel portion.
Fig. 10 is another perspective view of the drivingly turning portion of the wheel portion.
Fig. 11 is a front view of a tool magazine and a transport device within the range surrounded by the chain double-dashed line XI in Fig. 4.
Fig. 12 is a side view of the tool magazine and the transport device viewed in the direction indicated by the arrow XII in Fig. 4.
Fig. 13 is a perspective view showing a structure for attaching a guide device and a feed device.
Fig. 14 is another perspective view showing the structure for attaching the guide device and the feed device.
Fig. 15 is a perspective view of a moving body.
Fig. 16 is another perspective view of the moving body.

### DESCRIPTION OF EMBODIMENTS

An embodiment of the present invention will be described with reference to the drawings. In the drawings referred to below, the same or corresponding elements have the same reference characters allotted.

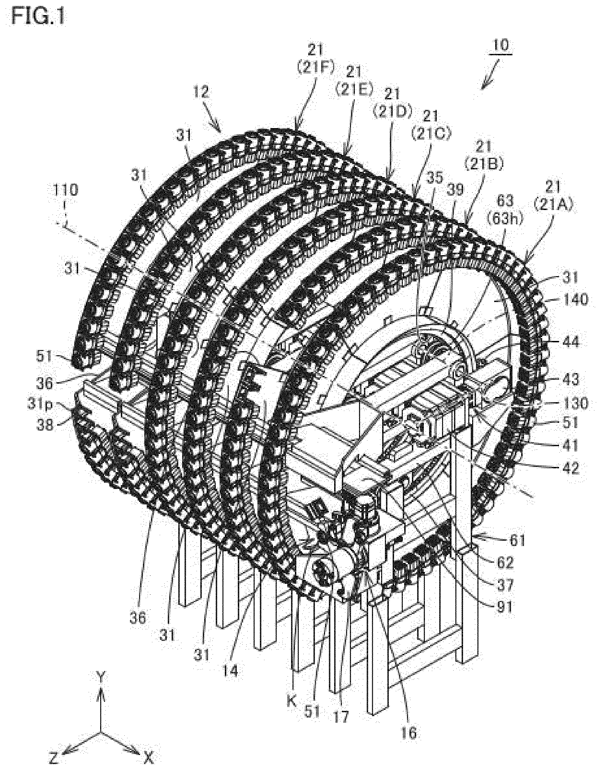

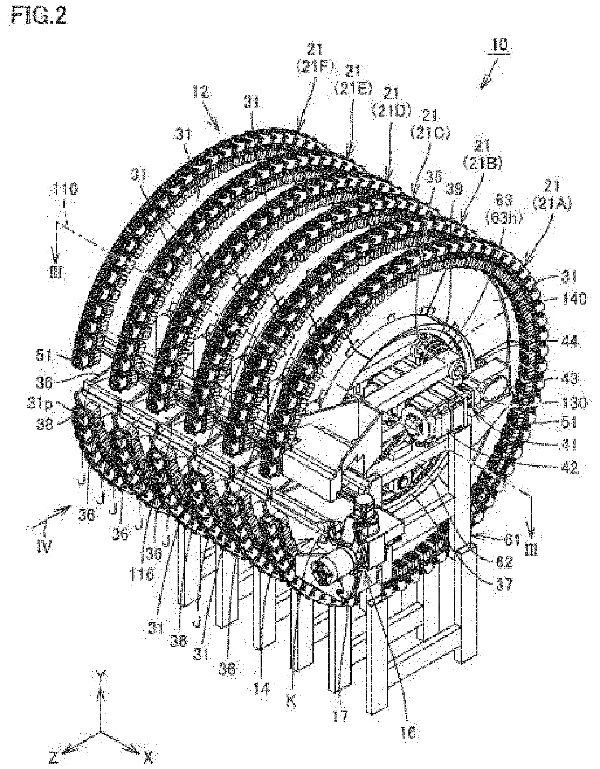

Figs. 1 and 2 are perspective views of a tool storage system according to an embodiment of the present invention.

Referring to Figs. 1 and 2, a tool storage system 10 according to the present embodiment is provided in a machine tool. Tool storage system 10 is a device for storing a plurality of tools for use in machining of a workpiece, and besides, is a device for sequentially transporting the stored tools toward a machining area, in which the workpiece is machined, in accordance with the purpose of machining the workpiece.

As a representative example, a machine tool including tool storage system 10 is a horizontal machining center. The machine tool may be a vertical machining center, a multitasking machine that has a turning function using a fixed tool and a milling function using a rotating tool, or an additive manufacturing (AM)/ subtractive manufacturing (SM) hybrid processing machine capable of performing AM of a workpiece and SM of a workpiece. The machine tool may be a lathe including a tool rest having an automatic tool change function.

The machine tool is a numerically controlled (NC) machine tool in which various operations for machining a workpiece are automated through numerical control by a computer.

In this specification, for the sake of describing the configuration of tool storage system 10, an axis parallel to the horizontal direction is referred to as "X-axis", an axis parallel to the horizontal direction and orthogonal to the X-axis is referred to as "Z-axis", and an axis parallel to the vertical direction is referred to as " Y-axis".

First, an overall structure of tool storage system 10 will be described. Tool storage system 10 includes a tool magazine 12, a transport device 14, and an automatic tool changer 16 (ATC). Tool magazine 12 stores a plurality of tools.

Automatic tool changer 16 includes an arm portion 17. Arm portion 17 is configured to be turnable about a turn center axis parallel to the Z-axis direction and slidable in the axial direction of the turn center axis. Automatic tool changer 16 changes tools between transport device 14 (a tool holding portion 51, which will be described later) positioned at an ATC tool standby position K outside the machining area and a tool spindle (not shown) within the machining area, in accordance with an operation of arm portion 17.

Transport device 14 transports tools between tool magazine 12 and automatic tool changer 16. Transport device 14 transports tools between an in-magazine tool transport position J in tool magazine 12 and ATC tool standby position K in automatic tool changer 16. Transport device 14 transports tools linearly. Transport device 14 transports tools in the X-axis direction.

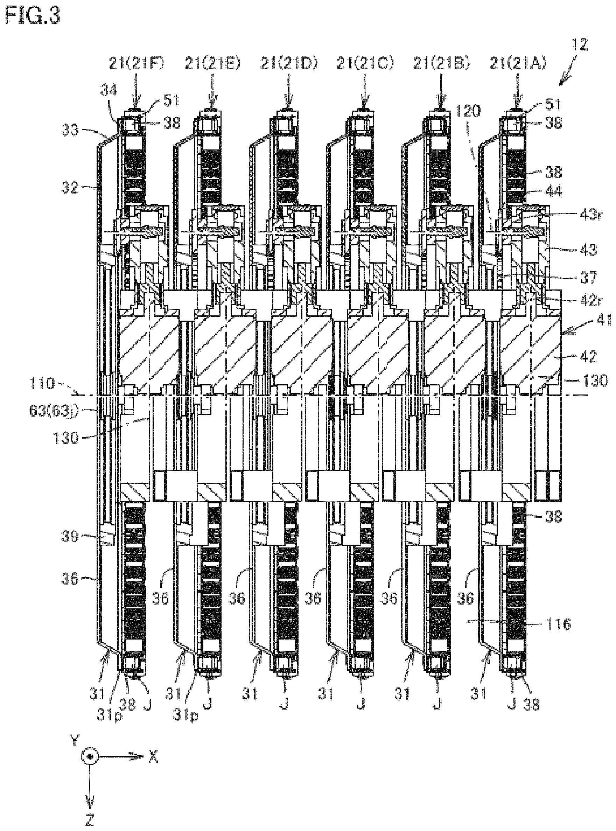

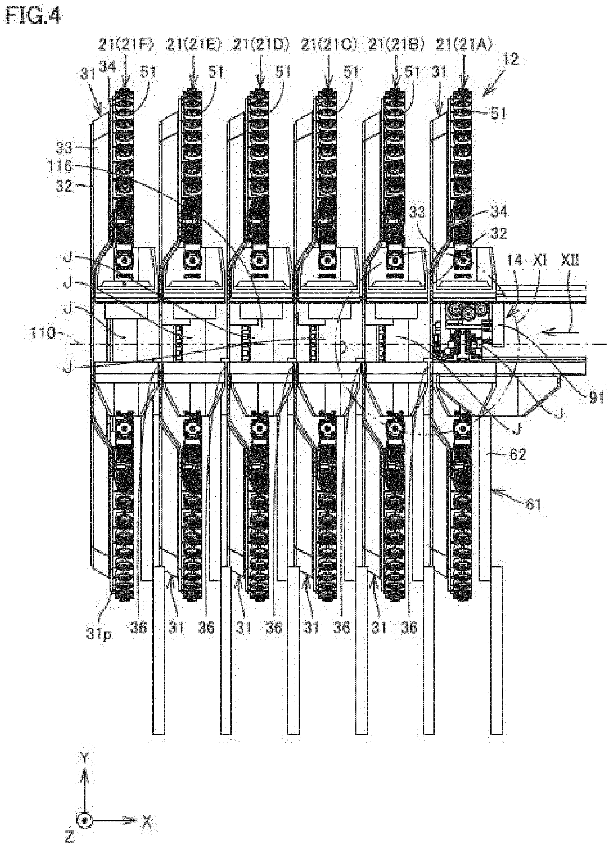

Fig. 3 is a sectional view of the tool magazine viewed in the direction indicated by the arrows on the line III-III in Fig. 2. Fig. 4 is a front view of the tool magazine viewed in the direction indicated by the arrow IV in Fig. 2.

Referring to Figs. 1 to 4, tool magazine 12 includes a tool storage portion 21. Tool storage portion 21 is configured to store a plurality of tools.

Tool storage portion 21 includes a wheel portion 31. Wheel portion 31 has a ring shape (wheel shape) centered on a predetermined axis 110 parallel to the X-axis direction. Wheel portion 31 is configured to be turnable about predetermined axis 110.

Wheel portion 31 has a hollow portion that passes therethrough in the axial direction of predetermined axis 110 and has a circular shape centered on predetermined axis 110 as viewed in the axial direction of predetermined axis 110. The diameter of wheel portion 31 centered on predetermined axis 110 is greater than the thickness of wheel portion 31 in the axial direction of predetermined axis 110. The radius of wheel portion 31 centered on predetermined axis 110 is greater than the thickness of wheel portion 31 in the axial direction of predetermined axis 110.

Wheel portion 31 has an outer circumferential edge 31p. Outer circumferential edge 31p is an edge of wheel portion 31 radially outwardly of predetermined axis 110 and extends in the circumferential direction of predetermined axis 110.

Tool storage portion 21 detachably stores a plurality of tools at positions along outer circumferential edge 31p of wheel portion 31. The plurality of tools are stored in tool storage portion 21 with the rotation center axis of each tool extending radially of predetermined axis 110. The plurality of tools are stored in tool storage portion 21 so as to be located side by side in the circumferential direction centered on predetermined axis 110.

The plurality of tools may be stored at positions overlapping outer circumferential edge 31p as viewed in the axial direction of predetermined axis 110, may be stored at positions radially inwardly of predetermined axis 110 relative to outer circumferential edge 31p, or may be stored at positions radially outwardly of predetermined axis 110 relative to outer circumferential edge 31p.

Tool storage portion 21 further includes a plurality of tool holding portions 51 (corresponding to "holding portions" in the present invention). Tool holding portions 51 are detachably attached to wheel portion 31. Tool holding portions 51 are provided along outer circumferential edge 31p of wheel portion 31.

Each tool holding portion 51 is configured so as to hold a tool. Tool holding portion 51 has a circular cylindrical shape in its entirety and has a lock mechanism portion (not shown), which is provided therein, for locking a tool.

In the present embodiment, tool storage portion 21 stores a tool via tool holding portion 51, and transport device 14 transports the tool between tool magazine 12 and automatic tool changer 16 via tool holding portion 51.

Tool magazine 12 includes a plurality of tool storage portions 21 (21A, 21B, 21C, 21D, 21E, 21F). Tool storage portions 21 basically have the same structure.

Tool storage portions 21 are located side by side in the axial direction (X-axis direction) of predetermined axis 110, centered on predetermined axis 110. Tool storage portion 21A, tool storage portion 21B, tool storage portion 21C, tool storage portion 21D, tool storage portion 21E, and tool storage portion 21F are located side by side in the X-axis direction in the stated order. Tool storage portion 21A is arranged closest to ATC standby position K among tool storage portions 21. Tool storage portion 21F is arranged farthest from ATC standby position K among tool storage portions 21.

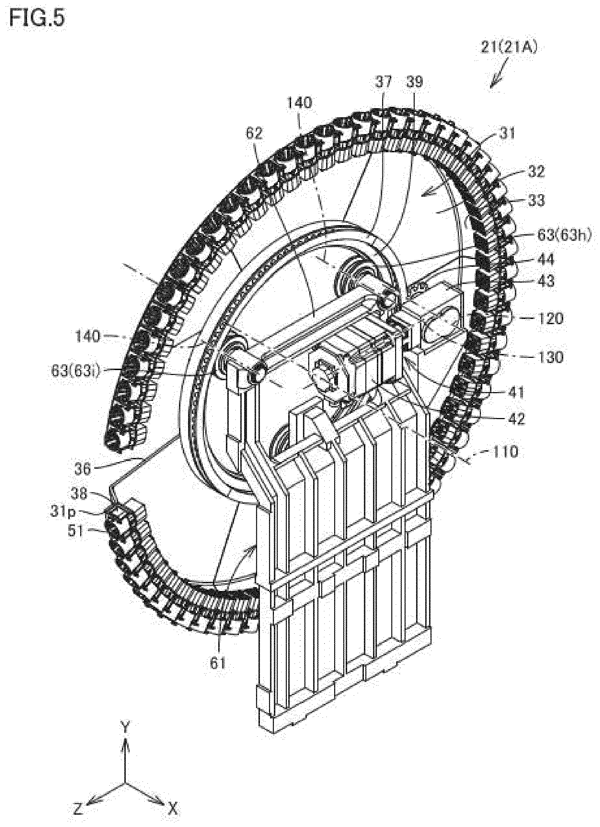

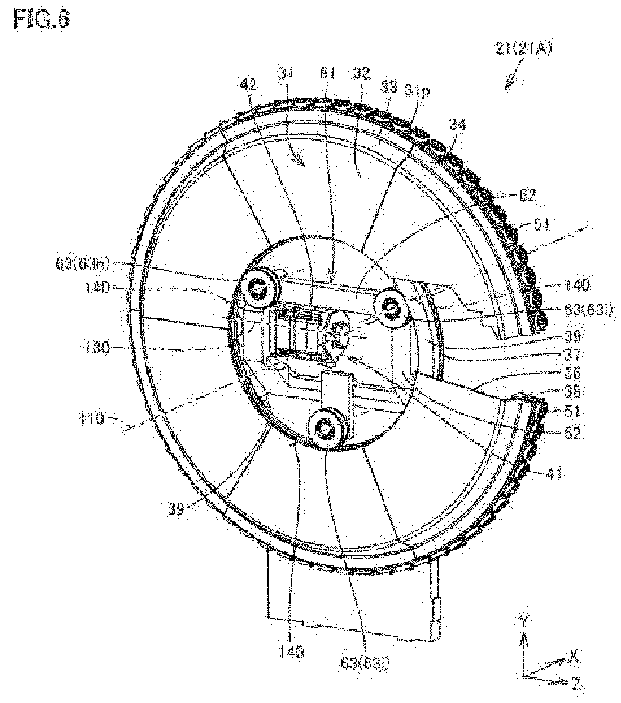

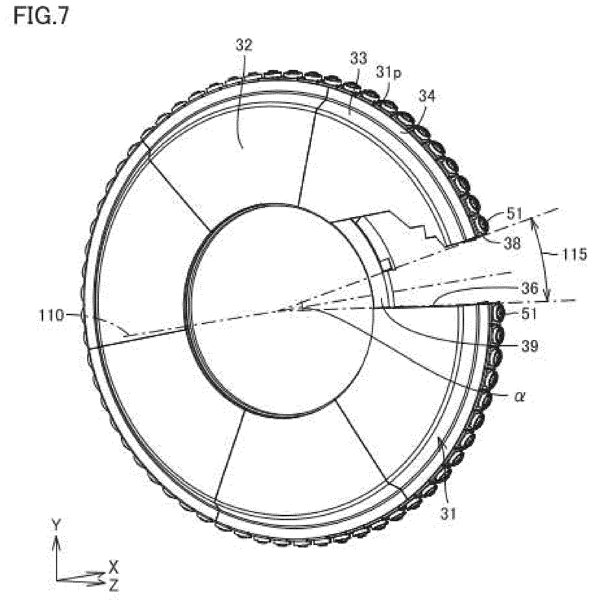

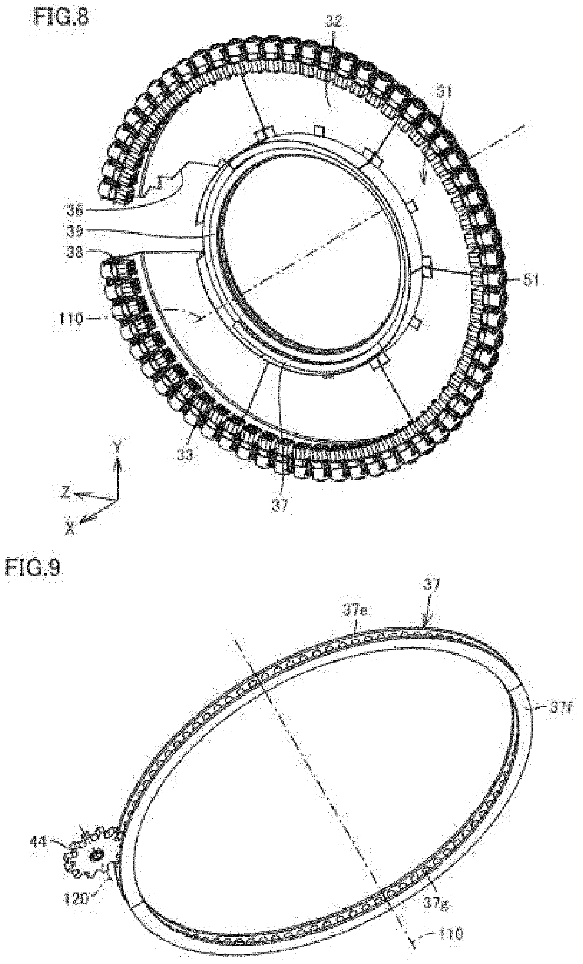

Figs. 5 and 6 are perspective views of the tool storage portion in Fig. 1. Figs. 7 and 8 are perspective views of the wheel portion in Fig. 1 and the plurality of tool holding portions attached to the wheel portion.

Referring to Figs. 1 to 8, wheel portion 31 includes a base portion 32, a tapered portion 33, and a flange portion 34.

Base portion 32 has a ring shape centered on predetermined axis 110. Base portion 32 is arranged parallel to a plane orthogonal to predetermined axis 110.

Tapered portion 33 extends like a belt around predetermined axis 110 along the outer circumferential edge of base portion 32. Tapered portion 33 extends from base portion 32 radially outwardly of predetermined axis 110 and also extends in the axial direction of predetermined axis 110. Tapered portion 33 is arranged obliquely to the plane orthogonal to predetermined axis 110.

Flange portion 34 extends like a belt around predetermined axis 110 along the outer circumferential edge of tapered portion 33. Flange portion 34 has a flange shape extending from tapered portion 33 radially outwardly of predetermined axis 110. Flange portion 34 is arranged parallel to the plane orthogonal to predetermined axis 110. The outer circumferential edge of flange portion 34 corresponds to outer circumferential edge 31p of wheel portion 31.

Wheel portion 31 is configured such that base portion 32 has a difference in level relative to flange portion 34 in the axial direction of predetermined axis 110. Base portion 32 has a difference in level relative to flange portion 34 so as to protrude in a direction away from ATC tool standby position K in the axial direction of predetermined axis 110. The direction in which base portion 32 protrudes relative to flange portion 34 is common among tool storage portions 21.

Base portion 32 may have a difference in level relative to flange portion 34 so as to protrude in a direction toward ATC tool standby position K in the axial direction of predetermined axis 110.

Tool storage portion 21 further includes a plurality of attachment portions 38. Attachment portion 38 is configured to allow tool holding portion 51 to be detachably attached thereto.

Attachment portions 38 are provided in wheel portion 31 side by side in the circumferential direction of predetermined axis 110. Attachment portions 38 are provided in flange portion 34. Attachment portions 38 are provided on the opposite side to base portion 32 with flange portion 34 in between in the axial direction of predetermined axis 110. Attachment portion 38 is configured to receive attachment portion 38 from one direction (the direction from ATC tool standby position K toward tool storage portion 21) along the axial direction of predetermined axis 110.

Referring to Figs. 5 to 8, an opening 36 is provided in wheel portion 31. Opening 36 is cut out from outer circumferential edge 31p of wheel portion 31 toward predetermined axis 110 in a partial section 115 in the outer circumferential direction of wheel portion 31 (the circumferential direction of predetermined axis 110) (see Fig. 7). Opening 36 passes through wheel portion 31 in the axial direction (X-axis direction) of predetermined axis 110.

Opening 36 is provided in the radial direction of predetermined axis 110, spanning from outer circumferential edge 31p of wheel portion 31 to a ring body 39, which will be described later. Opening 36 is provided in the radial direction of predetermined axis 110, spanning from flange portion 34 to tapered portion 33 to base portion 32.

The width of opening 36 in the outer circumferential direction of wheel portion 31 increases from radially outward to radially inwardly of predetermined axis 110 in its entirety.

Tool holding portions 51 are provided to be located side by side along outer circumferential edge 31p of wheel portion 31 and be absent at partial section 115. Attachment portions 38 are provided to be located side by side along outer circumferential edge 31p of wheel portion 31 and to be absent at partial section 115.

As shown in Fig. 7, opening 36 is cut out within the range of an angle α centered on predetermined axis 110 at a position (flange portion 34 in which attachment portions 38 are provided) in which tools are stored. In this case, angle α may be within the range of 5° or more and 35° or less (5° ≤ α ≤ 35°) or may be within the range of 15° or more and 25° or less (15° ≤ α ≤ 25°). Angle α may be greater than or equal to the angle range in which two tool holding portions 51 are located side by side in the circumferential direction of predetermined axis 110 or may be greater than or equal to the angle range in which three tool holding portions 51 are located side by side.

As shown in Figs. 2 to 4, opening 36 is arranged at in-magazine tool transport position J. At this time, a tool transport path 116, which extends in the axial direction of predetermined axis 110, is formed between in-magazine tool transport position J and ATC tool standby position K.

In-magazine tool transport position J is defined at a position away from predetermined axis 110 radially outwardly of predetermined axis 110. In-magazine tool transport position J is defined at a position away from predetermined axis 110 in the Z-axis direction. The position of in-magazine tool transport position J in the circumferential direction of predetermined axis 110 is not particularly limited.

As shown in Fig. 4, transport device 14 includes a moving body 91. Moving body 91 is configured to be movable in the axial direction of predetermined axis 110 through opening 36 while holding tool holding portion 51. Moving body 91 is configured to be movable between in-magazine tool transport position J and ATC tool standby position K through tool transport path 116.

In the present embodiment, tool magazine 12 includes tool storage portions 21 (21A, 21B, 21C, 21D, 21E, 21F) arranged in the axial direction of predetermined axis 110. In such a configuration, opening 36 may be arranged at in-magazine tool transport position J in each of tool storage portions 21 from tool storage portion 21F to tool storage portion 21A. At this time, opening 36 is arranged at in-magazine tool transport position J in all tool storage portions 21 located at positions close to ATC tool standby position K in the X-axis direction relative to tool storage portion 21 that stores a to-be-transported tool. For example, when a to-be-transported tool is stored in tool storage portion 21E, opening 36 is arranged at in-magazine tool transport position J at least in tool storage portion 21D, tool storage portion 21C, tool storage portion 21B, and tool storage portion 21A. Tool transport path 116 continuously extending in the axial direction of predetermined axis 110 is formed between in-magazine tool transport position J in tool storage portion 21 that stores the to-be-transported tool and ATC tool standby position K.

Between tool storage portion 21F and tool storage portion 21A, openings 36 are arranged to overlap each other as viewed in the axial direction of predetermined axis 110.

Moving body 91 is configured to be movable in the axial direction of predetermined axis 110 through openings 36 while holding tool holding portion 51. Moving body 91 is configured to be movable, through tool transport path 116, between in-magazine tool transport position J in tool storage portion 21 that stores the to-be-transported tool and ATC tool standby position K.

Tool holding portions 51 located side by side along outer circumferential edge 31p of wheel portion 31 are provided to be absent at partial section 115 in which opening 36 is provided. Thus, moving body 91 can move in the axial direction of predetermined axis 110 through tool transport path 116 without interfering with tool holding portion 51.

The present embodiment has described the configuration in which moving body 91 holds tool holding portion 51, but the moving body according to the present invention may be configured to directly hold a tool.

Referring to Figs. 1 to 4, description will be given, by way of example, with regard to an operational flow of tool storage system 10 when a tool (tool holding portion 51) stored in tool storage portion 21E is called to ATC tool standby position K.

Moving body 91 holding no tool holding portion 51 is arranged at ATC tool standby position K. First, in each tool storage portion 21 of tool storage portions 21A, 21B, 21C, 21D, opening 36 is indexed to in-magazine tool transport position J by causing wheel portion 31 to turn. At tool storage portion 21E, wheel portion 31 is caused to turn, thus indexing tool holding portion 51 holding a to-be-transported tool to in-magazine tool transport position J.

Subsequently, moving body 91 is moved from ATC tool standby position K to in-magazine tool transport position J in tool storage portion 21E.

Subsequently, tool holding portion 51 is held by moving body 91. Finally, moving body 91 is moved from in-magazine tool transport position J in tool storage portion 21E to ATC tool standby position K.

In tool storage portion 21E, the step of indexing tool holding portion 51 holding a to-be-transported tool to in-magazine tool transport position J may be performed after the step of moving body 91 from ATC tool standby position K to in-magazine tool transport position J in tool storage portion 21E.

In tool storage system 10 according to the present embodiment, when a tool is transported by transport device 14, moving body 91 moves in the axial direction of predetermined axis 110 through openings 36 while holding tool holding portion 51. In this case, since opening 36 is cut out from outer circumferential edge 31p of wheel portion 31 toward predetermined axis 110, moving body 91 can be prevented from projecting from outer circumferential edge 31p of wheel portion 31 radially outwardly of predetermined axis 110. As a result, tool storage system 10 can have a compact configuration, reducing an area in which a machine tool including tool storage system 10 is installed.

Next, the structure of tool magazine 12 will be described in more detail. Referring to Figs. 1 to 6, each tool storage portion 21 further includes a support portion 61.

Support portion 61 supports wheel portion 31 such that wheel portion 31 is turnable about predetermined axis 110. Tool storage portion 21 is supported by support portion 61 at a position upwardly away from the floor surface of, for example, a factory in which a machine tool is installed.

Support portion 61 includes a frame body 62 and a plurality of support rollers 63 (63h, 63i, 63j). Frame body 62 is formed of a frame extending in the up-down direction. Frame body 62 is arranged in a gap between wheel portions 31 adjacent to each other in the axial direction of predetermined axis 110.

Support rollers 63 are supported by frame body 62. Support roller 63 is provided to be rotatable about rotation center axis 140 parallel to predetermined axis 110.

Support rollers 63 are spaced from each other in the circumferential direction centered on predetermined axis 110. Support rollers 63 are provided in the same plane orthogonal to predetermined axis 110. Support roller 63h and support roller 63i are provided above support roller 63j. Support roller 63h and support roller 63i are provided at the same height.

Referring to Figs. 3 and 5 to 8, wheel portion 31 further includes ring body 39.

Ring body 39 has a thickness in the axial direction of predetermined axis 110 and has a ring shape centered on predetermined axis 110. Ring body 39 is provided along the inner circumferential edge of wheel portion 31. Ring body 39 is joined to base portion 32 in the axial direction of predetermined axis 110. Ring body 39 faces tapered portion 33 in the radial direction of predetermined axis 110. Tapered portion 33 is provided to surround ring body 39 on the outer circumference of predetermined axis 110.

Support rollers 63 are in contact with wheel portion 31 having a ring shape from radially inwardly of predetermined axis 110. Support rollers 63 are in contact with ring body 39 from radially inwardly of predetermined axis 110. Support rollers 63 are arranged on the inner circumferential side of wheel portion 31.

With such a configuration, support rollers 63 are in contact with wheel portion 31 from radially inwardly of predetermined axis 110, resulting in a reduced length of support portion 61 projecting from wheel portion 31 in the axial direction of predetermined axis 110. This can reduce the spacing between wheel portions 31 adjacent to each other in the axial direction of predetermined axis 110, resulting in a more compact configuration of tool storage system 10.

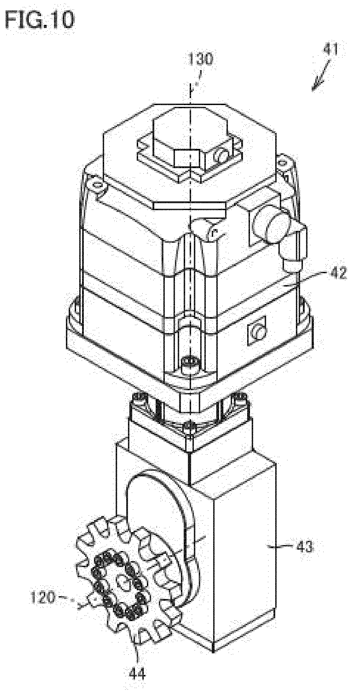

Figs. 9 and 10 are perspective views of a drivingly turning portion of the wheel portion. Referring to Figs. 3 to 10, tool storage portion 21 further includes a drivingly turning portion 41. Drivingly turning portion 41 is a drive mechanism for turning wheel portion 31 about predetermined axis 110. Drivingly turning portion 41 is provided for each tool storage portion 21 (wheel portion 31).

Drivingly turning portion 41 includes a motor 42, a reduction gear 43, a first gear 44, and a second gear 37. Motor 42 has an output shaft 42r (see Fig. 3). Output shaft 42r outputs rotation centered on rotation center axis 130 extending in the direction orthogonal to predetermined axis 110. Output shaft 42r outputs rotation centered on rotation center axis 130 parallel to the Z-axis. Output shaft 42r of motor 42 is connected to reduction gear 43.

Reduction gear 43 has an output shaft 43r (see Fig. 3). Output shaft 43r outputs rotation centered on rotation center axis 120 parallel to predetermined axis 110 (X-axis). Reduction gear 43 changes the axial direction of the rotation center axis by 90° while slowing down the rotation from motor 42.

Output shaft 43r of reduction gear 43 is connected to first gear 44. First gear 44 rotates, together with output shaft 43r, about rotation center axis 120.

Second gear 37 is provided around predetermined axis 110. Second gear 37 is provided along the inner circumferential edge of wheel portion 31. Second gear 37 is joined to ring body 39 in the axial direction of predetermined axis 110. Ring body 39 is arranged between base portion 32 and second gear 37 in the axial direction of predetermined axis 110. Second gear 37 meshes with first gear 44.

As shown in Fig. 9, second gear 37 includes a first plate 37e, a second plate 37f, and a plurality of pins 37g.

First plate 37e and second plate 37f are each formed of a ring-shaped plate member centered on predetermined axis 110. First plate 37e and second plate 37f are spaced from each other in the axial direction of predetermined axis 110. Pin 37g extends in the axial direction of predetermined axis 110 and is connected to first plate 37e and second plate 37f at the opposite ends thereof. Pins 37g are spaced from each other in the circumferential direction of predetermined axis 110. In second gear 37, pins 37g form teeth located side by side in the circumferential direction of predetermined axis 110.

Motor 42 outputs forward or backward rotation to wheel portion 31. As the rotation output from motor 42 is transferred to second gear 37 via reduction gear 43 and first gear 44 in the stated order, wheel portion 31 turns about predetermined axis 110 in the forward direction or backward direction.

Motor 42 and reduction gear 43 are provided in support portion 61 (frame body 62). Motor 42 and reduction gear 43 are supported by support portion 61 (frame body 62).

As shown in Fig. 3, motor 42 of one tool storage portion 21 (e.g., tool storage portion 21F) is partially arranged, in the axial direction of predetermined axis 110, inside wheel portion 31 of another tool storage portion 21 (e.g., tool storage portion 21E) arranged adjacent to the one tool storage portion 21.

As viewed in the axial direction of predetermined axis 110, motor 42 of one tool storage portion 21 (e.g., tool storage portion 21F) is arranged to overlap the hollow portion inside wheel portion 31 of another tool storage portion 21 (e.g., tool storage portion 21E) arranged adjacent to the one tool storage portion 21. As viewed radially outwardly of predetermined axis 110 from the axis center thereof, motor 42 of one tool storage portion 21 (e.g., tool storage portion 21F) is arranged to overlap the inner circumferential edge of wheel portion 31 of another tool storage portion 21 (e.g., tool storage portion 21E) arranged adjacent to the one tool storage portion 21.

With such a configuration, the spacing between wheel portions 31 of tool storage portions 21 adjacent to each other in the axial direction of predetermined axis 110 can be reduced. As a result, tool storage system 10 can have a more compact configuration.

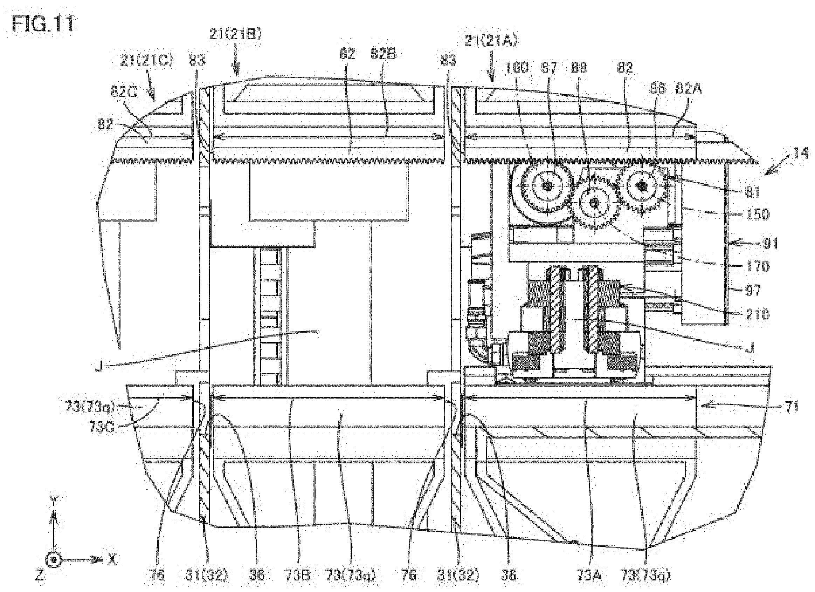

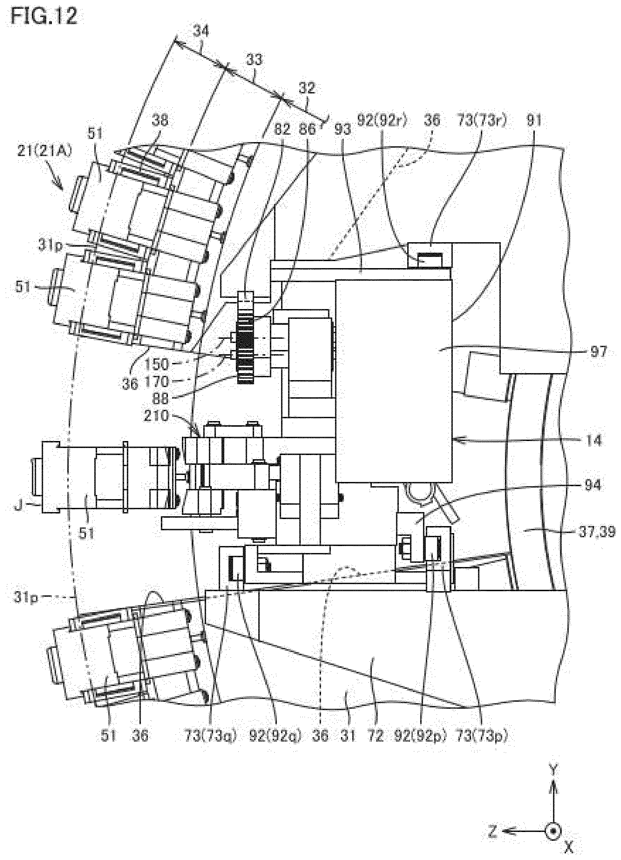

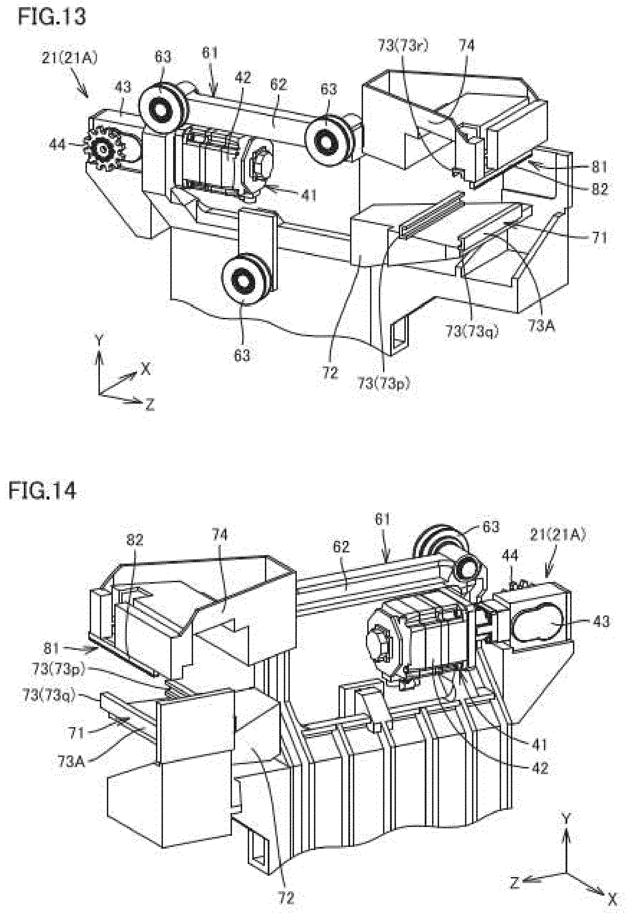

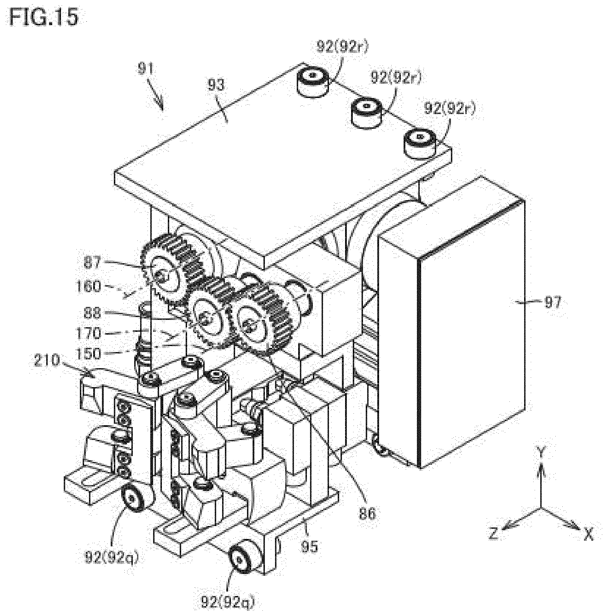

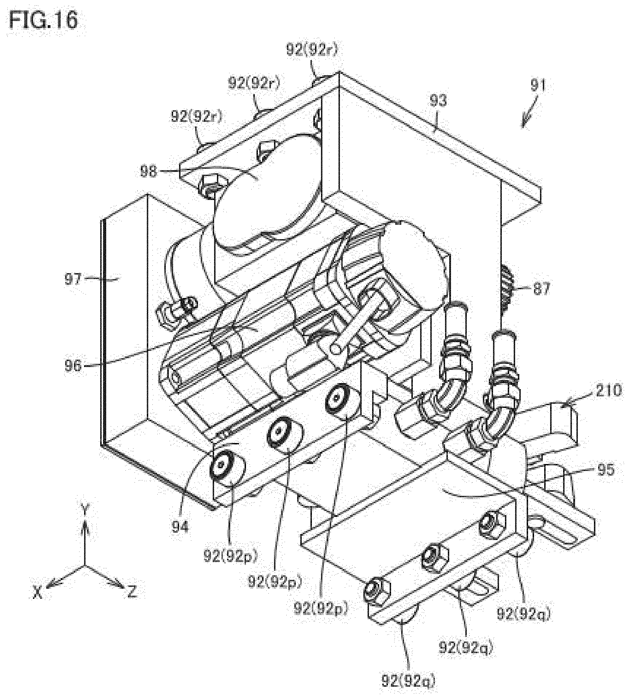

Next, the structure of transport device 14 will be described in more detail. Fig. 11 is a front view of the tool magazine and the transport device within the range surrounded by the chain double-dashed line XI in Fig. 4. Fig. 12 is a side view of the tool magazine and the transport device as viewed in the direction indicated by the arrow XII in Fig. 4. Figs. 13 and 14 are perspective views showing a structure for attaching the guide device and the feed device. Figs. 15 and 16 are perspective views of the moving body.

Referring to Figs. 11 to 16, moving body 91 includes a top plate 93, a first bottom plate 94, a second bottom plate 95, and a tool clamp mechanism portion 210.

Moving body 91 has a rectangular parallelepiped outer shape in its entirety. Top plate 93 is arranged at the top of moving body 91, and first bottom plate 94 and second bottom plate 95 are arranged at the bottom of moving body 91.

Tool clamp mechanism portion 210 is provided between top plate 93 and first bottom plate 94, second bottom plate 95 in the up-down direction. Tool clamp mechanism portion 210 is configured to operate between the clamping state of holding the tool (tool holding portion 51) and the unclamping state of releasing holding of the tool (tool holding portion 51).

As shown in Fig. 12, opening 36 is arranged at in-magazine tool transport position J. In Fig. 12, the trajectory drawn by outer circumferential edge 31p of wheel portion 31 when wheel portion 31 turns about predetermined axis 110 is indicated by the chain double-dashed line.

As viewed in the axial direction of predetermined axis 110, moving body 91 is arranged radially inwardly of predetermined axis 110 relative to outer circumferential edge 31p of wheel portion 31. As viewed in the axial direction of predetermined axis 110, moving body 91 is arranged radially outwardly of predetermined axis 110 relative to second gear 37 and ring body 39. Moving body 91 is arranged in the plane of an opening surface of opening 36 as viewed in the axial direction of predetermined axis 110.

Transport device 14 further includes a guide device 71. Guide device 71 is a device for guiding moving body 91 in the axial direction of predetermined axis 110.

Guide device 71 includes a rail 73. Rail 73 extends along the axial direction of predetermined axis 110. Rail 73 has a groove shape extending in the axial direction of predetermined axis 110 while forming a recessed cross section. In the present embodiment, guide device 71 includes a plurality of rails 73 (73p, 73q, 73r).

As shown in Fig. 11, rail 73 has a first cutout 76. First cutout 76 is provided in each rail 73 of rail 73p, rail 73q, and rail 73r. First cutout 76 is provided for each tool storage portion 21. First cutout 76 passes through rail 73 in the outer circumferential direction of wheel portion 31 (the circumferential direction of predetermined axis 110). First cutout 76 is configured to allow wheel portion 31 in each tool storage portion 21 to pass therethrough when this wheel portion 31 turns.

First cutout 76 is provided in correspondence with wheel portion 31 of each tool storage portion 21. First cutout 76 is provided on a plane in which base portion 32 of wheel portion 31 is arranged. First cutout 76 is configured to allow base portion 32 of wheel portion 31 of each tool storage portion 21 to pass therethrough when this wheel portion 31 turns. Rail 73 is divided by first cutout 76 between tool storage portions 21 adjacent to each other in the axial direction (X-axis direction) of predetermined axis 110.

To provide a description within the range typically shown in Fig. 11, first cutout 76 is provided on each of the plane in which base portion 32 of wheel portion 31 is arranged in tool storage portion 21A and the plane in which base portion 32 of wheel portion 31 is provided in tool storage portion 21B. First cutout 76 divides rail 73 (73q) into a rail piece 73A, which guides moving body 91 at in-magazine tool transport position J in tool storage portion 21A, a rail piece 73B, which guides moving body 91 at in-magazine tool transport position J in tool storage portion 21B, and a rail piece 73C, which guides moving body 91 at in-magazine tool transport position J in tool storage portion 21C.

Each of the gap between rail piece 73A and rail piece 73B and the gap between rail piece 73B and rail piece 73C is greater than the thickness of base portion 32 in the axial direction (X-axis direction) of predetermined axis 110.

Such a configuration can allow wheel portion 31 to turn about predetermined axis 110 without interfering with rails 73 (73p, 73q, 73r).

As shown in Figs. 13 and 14, rails 73 (73p, 73q, 73r) are supported by support portion 61 (frame body 62). To provide a description within the range shown in Fig. 11, rail piece 73A is supported by support portion 61 in tool storage portion 21A, rail piece 73B is supported by support portion 61 in tool storage portion 21B, and rail piece 73C is supported by support portion 61 in tool storage portion 21C. Rail 73 is fixed and does not turn together with wheel portion 31.

Support portion 61 further includes a lower support arm 72 and an upper support arm 74. Upper support arm 74 and lower support arm 72 extend from frame body 62 in the Z-axis direction in an arm shape. Upper support arm 74 is arranged above lower support arm 72. Upper support arm 74 and lower support arm 72 face each other while being spaced from each other in the up-down direction (Y-axis direction).

Rail 73p and rail 73q are attached to lower support arm 72. Rail 73r is attached to upper support arm 74.

With such a configuration, support portion 61 that turnably supports wheel portion 31 is shared as the member for supporting rails 73 (73p, 73q, 73r), resulting in a simple configuration of tool storage system 10.

Guide device 71 further includes a rotation roller 92. Rotation roller 92 is provided in moving body 91. Rotation roller 92 is provided to be rotatable about the rotation center axis extending in the direction orthogonal to predetermined axis 110 (X-axis). Rotation roller 92 is formed of a cam follower. Rotation roller 92 is fitted with rail 73 having a groove shape.

Guide device 71 includes a plurality of rotation rollers 92 (92p, 92q, 92r). Rotation roller 92p is provided on first bottom plate 94. Rotation rollers 92r are provided side by side in the X-axis direction on first bottom plate 94. Rotation roller 92q is provided on second bottom plate 95. Rotation rollers 92q are provided side by side in the X-axis direction on second bottom plate 95. Rotation roller 92q is provided at a position away from rotation roller 92p in the Z-axis direction. Rotation rollers 92p, 92q are provided to be rotatable about the rotation center axis extending in the Z-axis direction.

Rotation roller 92r is provided on top plate 93. Rotation rollers 92r are provided side by side in the X-axis direction on top plate 93. Rotation rollers 92r are provided to be rotatable about the rotation center axis extending in the Y-axis direction. Rotation rollers 92r are provided above rotation rollers 92p and rotation rollers 92q.

Rotation roller 92p, rotation roller 92q, and rotation roller 92r are fitted with rail 73p, rail 73q, and rail 73r, respectively.

As shown in Fig. 12, guide device 71 is arranged radially inwardly of predetermined axis 110 relative to outer circumferential edge 31p of wheel portion 31, as viewed in the axial direction of predetermined axis 110. As viewed in the axial direction of predetermined axis 110, guide device 71 is arranged radially inwardly of predetermined axis 110 relative to flange portion 34 and tapered portion 33. As viewed in the axial direction of predetermined axis 110, guide device 71 is arranged radially outwardly of predetermined axis 110 relative to second gear 37 and ring body 39.

With such a configuration, guide device 71 does not project radially outwardly of predetermined axis 110 relative to outer circumferential edge 31p of wheel portion 31, resulting in a more compact configuration of tool storage system 10.

Transport device 14 further includes a feed device 81. Feed device 81 is a device for feeding moving body 91 in the axial direction of predetermined axis 110.

Feed device 81 includes a rack 82. Rack 82 extends along the axial direction of predetermined axis 110.

As shown in Fig. 11, rack 82 has a second cutout 83. Second cutout 83 is provided for each tool storage portion 21. Second cutout 83 passes through rack 82 in the outer circumferential direction of wheel portion 31 (the circumferential direction of predetermined axis 110). Second cutout 83 is configured to allow wheel portion 31 in each tool storage portion 21 to pass therethrough when this wheel portion 31 turns.

Second cutout 83 is provided in correspondence with wheel portion 31 of each tool storage portion 21. Second cutout 83 is provided on the plane in which base portion 32 of wheel portion 31 is arranged. Second cutout 83 is configured to allow base portion 32 of wheel portion 31 of each tool storage portion 21 to pass therethrough when this wheel portion 31 turns. Rack 82 is divided by second cutout 83 between tool storage portions 21 adjacent to each other in the axial direction (X-axis direction) of predetermined axis 110.

To provide a description within the range typically shown in Fig. 11, second cutout 83 is provided on each of the plane in which base portion 32 of wheel portion 31 is arranged in tool storage portion 21A and the plane in which base portion 32 of wheel portion 31 is arranged in tool storage portion 21B. Second cutout 83 divides rack 82 into a rack piece 82A, which feeds moving body 91 at in-magazine tool transport position J in tool storage portion 21A, a rack piece 82B, which feeds moving body 91 at in-magazine tool transport position J in tool storage portion 21B, and a rack piece 82C, which guides moving body 91 at in-magazine tool transport position J in tool storage portion 21C.

Each of the gap between rack piece 82A and rack piece 82B and the gap between rack piece 82B and rack piece 82C is greater than the thickness of base portion 32 in the axial direction (X-axis direction) of predetermined axis 110.

Such a configuration can allow wheel portion 31 to turn about predetermined axis 110 without interfering with rack 82.

As shown in Figs. 13 and 14, rack 82 is supported by support portion 61 (frame body 62). To provide a description within the range shown in Fig. 11, rack piece 82A is supported by support portion 61 in tool storage portion 21A, rack piece 82B is supported by support portion 61 in tool storage portion 21B, and rack piece 82C is supported by support portion 61 in tool storage portion 21C. Rack 82 is fixed and does not turn together with wheel portion 31.

Rack 82 is attached to upper support arm 74. Rack 82 is provided at a position away from rail 73r in the Z-axis direction. Rack 82 is provided between rail 73r and rail 73p, rail 73q in the up-down direction.

With such a configuration, support portion 61 that turnably supports wheel portion 31 is shared as the member for supporting rack 82, resulting in a simple configuration of tool storage system 10.

Feed device 81 further includes a motor 96, a gear box 97, and a reduction gear 98. Motor 96, gear box 97, and reduction gear 98 are mounted in moving body 91. Motor 96 and reduction gear 98 are provided between top plate 93 and first bottom plate 94, second bottom plate 95 in the up-down direction. Reduction gear 98 is provided above motor 96. Gear box 97 is provided adjacent to motor 96 and reduction gear 98 in the X-axis direction.

Motor 96 includes an output shaft (not shown) that outputs rotation centered on the rotation center axis extending in the axial direction (X-axis direction) of predetermined axis 110. Gear box 97 includes a plurality of built-in gears for transferring the rotation from motor 96 to reduction gear 98. Reduction gear 98 includes an output shaft (not shown) that outputs rotation centered on the rotation center axis extending in the Z-axis direction. The output shaft of reduction gear 98 is connected to a second pinion 87, which will be described later. Reduction gear 98 changes the axial direction of the rotation center axis by 90° while slowing down the rotation from gear box 97.

Feed device 81 further includes a first pinion 86, second pinion 87, and a third pinion 88. First pinion 86, second pinion 87, and third pinion 88 are provided in moving body 91.

First pinion 86, second pinion 87, and third pinion 88 are provided to be rotatable about first rotation center axis 150, second rotation center axis 160, and third rotation center axis 170, respectively. First rotation center axis 150, second rotation center axis 160, and third rotation center axis 170 extend in the Z-axis direction.

First pinion 86, second pinion 87, and third pinion 88 are provided above tool clamp mechanism portion 210. First pinion 86, second pinion 87, and third pinion 88 are provided to face rack 82 in the up-down direction (Y-axis direction).

First pinion 86 and second pinion 87 are spaced from each other in the axial direction (X-axis direction) of predetermined axis 110. Third pinion 88 is arranged between first pinion 86 and second pinion 87 in the axial direction (X-axis direction) of predetermined axis 110.

First pinion 86 and second pinion 87 are engaged with rack 82. Third pinion 88 is engaged with first pinion 86 and second pinion 87. Third pinion 88 is not engaged with rack 82.

First rotation center axis 150 and second rotation center axis 160 are spaced from each other in the axial direction (X-axis direction) of predetermined axis 110. Third rotation center axis 170 is positioned between first rotation center axis 150 and second rotation center axis 160 in the axial direction (X-axis direction) of predetermined axis 110. The distance between rack 82 and third rotation center axis 170 in the up-down direction (Y-axis direction) is greater than the distance between rack 82 and first rotation center axis 150, second rotation center axis 160 in the up-down direction (Y-axis direction).

The spacing between first rotation center axis 150 and second rotation center axis 160 in the axial direction of predetermined axis 110 is greater than the cutout length of second cutout 83 in the axial direction of predetermined axis 110. The length of rack 82 (the length of rack piece 82A or the like) in each tool storage portion 21 in the axial direction of predetermined axis 110 is greater than the spacing between first rotation center axis 150 and second rotation center axis 160 in the axial direction of predetermined axis 110.

With such a configuration, first pinion 86 and second pinion 87 are spaced from each other in the axial direction of predetermined axis 110, and accordingly, at least any one of first pinion 86 and second pinion 87 can be engaged with rack 82 even though second cutout 83 is provided in rack 82. Also, third pinion 88 that is not engaged with rack 82 is engaged with first pinion 86 and second pinion 87, and accordingly, the rotation of first pinion 86 can be transferred to second pinion 87 via third pinion 88. Thus, moving body 91 can be smoothly fed in the axial direction of predetermined axis 110 by feed device 81.

The present embodiment has described the case in which first pinion 86 is a driving wheel and second pinion 87 and third pinion 88 are driven wheels, but the driving wheel may be any pinion of first pinion 86, second pinion 87, and third pinion 88.

As shown in Fig. 12, feed device 81 is arranged radially inwardly of predetermined axis 110 relative to outer circumferential edge 31p of wheel portion 31, as viewed in the axial direction of predetermined axis 110. As viewed in the axial direction of predetermined axis 110, feed device 81 is arranged radially outwardly of predetermined axis 110 relative to second gear 37 and ring body 39. As viewed in the axial direction of predetermined axis 110, feed device 81 is arranged radially inwardly of predetermined axis 110 relative to flange portion 34 and tapered portion 33.

With such a configuration, feed device 81 does not project radially outwardly of predetermined axis 110 relative to outer circumferential edge 31p of wheel portion 31, resulting in a more compact configuration of tool storage system 10.

To summarize the structure of tool storage system 10 in the embodiment of the present invention described above, tool storage system 10 as a storage system in the present embodiment includes tool storage portion 21 as a storage portion that includes wheel portion 31 turnable about predetermined axis 110 and detachably stores tools as a plurality of transport targets at positions along outer circumferential edge 31p of wheel portion 31. Wheel portion 31 has, in partial section 115 in the outer circumferential direction of wheel portion 31, opening 36 that is cut out from outer circumferential edge 31p of wheel portion 31 toward predetermined axis 110 and passes through wheel portion 31 in the axial direction of predetermined axis 110. Tool storage system 10 further includes transport device 14 that includes moving body 91 movable in the axial direction of predetermined axis 110 through opening 36 while holding the tools and transports the tools to tool storage portion 21.

In tool storage system 10 according to the embodiment of the present invention which is configured as described above, moving body 91 can be prevented from projecting from outer circumferential edge 31p of wheel portion 31, resulting in a compact configuration of tool storage system 10.

The present embodiment has described the case in which the transport target in the present invention is a tool, but the present invention is not limited thereto, and the transport target may be a workpiece. The workpiece has, for example, a columnar shape or a circular cylindrical shape. The structure of the holding portion when the transport target is a workpiece is similar to the structure of tool holding portion 51 when the transport target is a tool. The workpiece is held by the holding portion while being attached to the member corresponding to the shank portion of the tool.

It should be understood that the embodiments disclosed herein have been presented for the purpose of illustration and non-restrictive in every respect. It is therefore intended that the scope of the present invention is defined by claims, not only by the description above, and encompasses all modifications and variations equivalent in meaning and scope to the claims.

### INDUSTRIAL APPLICABILITY

The present invention is applied to, for example, a machine tool such as a machining center.

### REFERENCE SIGNS LIST

10 tool storage system; 12 tool magazine; 14 transport device; 16 automatic tool changer; 17 arm portion; 21, 21A, 21B, 21C, 21D, 21E, 21F tool storage portion; 31 wheel portion; 31p outer circumferential edge; 32 base portion; 33 tapered portion; 34 flange portion; 36 opening; 37 second gear; 37e first plate; 37f second plate; 37g pin; 38 attachment portion; 39 ring body; 41 drivingly turning portion; 42, 96 motor; 42r, 43r output shaft; 43, 98 reduction gear; 44 first gear; 51 tool holding portion; 61 support portion; 62 frame body; 63, 63h, 63i, 63j support roller; 71 guide device; 72 lower support arm; 73, 73p, 73q, 73r rail; 73A, 73B, 73C rail piece; 74 upper support arm; 76 first cutout; 81 feed device; 82 rack; 82A, 82B, 82C rack piece; 83 second cutout; 86 first pinion; 87 second pinion; 88 third pinion; 91 moving body; 92, 92p, 92q, 92r rotation roller; 93 top plate; 94 first bottom plate; 95 second bottom plate; 97 gearbox; 110 predetermined axis; 115 section; 116 tool transport path; 120, 130, 140 rotation center axis; 150 first rotation center axis; 160 second rotation center axis; 170 third rotation center axis; 210 tool clamp mechanism portion; J in-magazine tool transport position; K ATC standby position.

## Claims

1. A storage system comprising:
a storage portion including a wheel portion turnable about a predetermined axis, the storage portion detachably storing a plurality of transport targets at positions along an outer circumferential edge of the wheel portion,
each of the transport targets being a tool or a workpiece,
the wheel portion having, in a partial section in an outer circumferential direction of the wheel portion, an opening cut out from the outer circumferential edge of the wheel portion toward the predetermined axis, the opening passing through the wheel portion in an axial direction of the predetermined axis,
the storage system further comprising a transport device including a moving body movable in the axial direction of the predetermined axis through the opening while holding each of the plurality of transport targets, the transport device transporting each of the plurality of transport targets to the storage portion.

2. The storage system according to claim 1, comprising a plurality of the storage portions arranged in the axial direction of the predetermined axis.

3. The storage system according to claim 1 or 2, wherein
the storage portion further includes a plurality of holding portions detachably attached to the wheel portion for respectively holding the plurality of transport targets,
the moving body moves in the axial direction of the predetermined axis through the opening while holding each of the plurality of holding portions, and
the plurality of holding portions are provided to be located side by side along the outer circumferential edge of the wheel portion and to be absent at the partial section.

4. The storage system according to claim 1, wherein the transport device further includes a guide device that guides the moving body in the axial direction of the predetermined axis, the guide device being arranged radially inwardly of the predetermined axis relative to the outer circumferential edge of the wheel portion.

5. The storage system according to claim 4, comprising a plurality of the storage portions arranged in the axial direction of the predetermined axis, wherein
the guide device includes a rail extending in the axial direction of the predetermined axis, and
the rail has, for each of the plurality of storage portions, a first cutout passing through the rail in the outer circumferential direction of the wheel portion, the first cutout allowing the wheel portion to pass therethrough.

6. The storage system according to claim 5, wherein
the storage portion further includes a support portion that supports the wheel portion such that the wheel portion is turnable about the predetermined axis, and
the rail is supported by the support portion.

7. The storage system according to claim 1, wherein the transport device further includes a feed device that feeds the moving body in the axial direction of the predetermined axis, the feed device being arranged radially inwardly of the predetermined axis relative to the outer circumferential edge of the wheel portion.

8. The storage system according to claim 7, comprising a plurality of the storage portions arranged in the axial direction of the predetermined axis, wherein
the feed device includes a rack extending in the axial direction of the predetermined axis, and
the rack has, for each of the plurality of storage portions, a second cutout passing through the rack in the outer circumferential direction of the wheel portion, the second cutout allowing the wheel portion to pass therethrough.

9. The storage system according to claim 8, wherein
the storage portion further includes a support portion that supports the wheel portion such that the wheel portion is turnable about the predetermined axis, and
the rack is supported by the support portion.

10. The storage system according to claim 8 or 9, wherein
the feed device further includes a first pinion, a second pinion, and a third pinion provided in the moving body,
the first pinion and the second pinion are spaced from each other in the axial direction of the predetermined axis and are engaged with the rack, and
the third pinion is engaged with the first pinion and the second pinion and is not engaged with the rack.
